# EUROPÄISCHE PATENTSCHRIFT

(11) **EP 1 510 287 B1**
(45) Veröffentlichungstag und Bekanntmachung des Hinweises auf die Patenterteilung: **08.11.2006**
(21) Anmeldenummer: 04014271.3
(22) Anmeldetag: 18.06.2004
(51) Int. Cl.: B23Q 17/22, B23P 11/02

(54) **Vorrichtung zum Befestigen eines Werkzeugs in einem Werkzeugfutter**
Apparatus for clamping a tool in a tool holder
Appareil pour serrer un outil dans un porte-outil

(30) Priorität: 27.08.2003 DE 10339419
(43) Veröffentlichungstag der Anmeldung: 02.03.2005
(73) Patentinhaber: E.Zoller GmbH & Co.KG Einstell-und Messgeräte, 71691 Freiberg/Neckar (DE)
(72) Erfinder: Pfau, Christian, 74321 Bietigheim-Bissingen (DE); Buttau, Dieter, 74379 Ingersheim (DE)
(74) Vertreter: Heyerhoff, Markus

(56) Entgegenhaltungen:
- WO-A-03/002298

## Beschreibung

### Stand der Technik

Die Erfindung betrifft eine Vorrichtung zum Befestigen eines Werkzeugs in einem Werkzeugfutter nach dem Oberbegriff des Patentanspruchs 1.

Aus der WO 03/002298 A1 ist eine Vorrichtung zum Befestigen eines Werkzeugs in einem Werkzeugfutter, insbesondere einem Schrumpffutter, bekannt. Die Vorrichtung weist ein Magazin mit einer Be- und Entladestation auf, in die das Werkzeug und das Werkzeugfutter vor einem Befestigungsvorgang des Werkzeugs im Werkzeugfutter von einem Bediener eingesetzt werden können. Außerdem umfasst die Vorrichtung ein Steuersystem, in das für den Befestigungsvorgang notwendige Daten von dem Bediener eingegeben und/oder aus einer Datenbank geladen werden können. Das Steuersystem kann nach dem Einsetzen des Werkzeugs, dem Einsetzen des Werkzeugfutters und dem Eingeben und/oder Laden der Daten insbesondere alle beweglichen Mittel steuern, die für einen Befestigungsvorgang zu bewegen sind.

Ein erstes bewegliches Mittel der Vorrichtung ist das Magazin, das die Be- und Entladestation mittels einer Drehbewegung in eine Entnahmeposition bringen kann. Ferner umfasst die Vorrichtung einen Werkzeuggreifer, der das Werkzeugfutter mittels mindestens einer vertikalen Ausfahrbewegung, mindestens eines horizontalen Verfahrens und mindestens einer Drehbewegung von der Entnahmeposition holen und in eine Spindel einsetzen kann. Weiterhin ist zum Positionieren des Werkzeugs im Werkzeugfutter an einem Querschlitten ein Haltemittel zum Halten des Werkzeugs angeordnet, wobei der Querschlitten in vertikaler Richtung und das Haltemittel in horizontaler Richtung verfahrbar sind. Das Haltemittel ist außerdem für eine Drehbewegung um eine Werkzeugachse ausgebildet. Die Vorrichtung umfasst außerdem ein als Induktionseinheit ausgestaltetes Öffnungsmittel zum Öffnen des Werkzeugfutters für eine Werkzeugaufnahme, die zumindest in vertikaler Richtung verfahrbar ist, jedoch auch für eine Verfahrbarkeit in horizontaler Richtung und eine Drehbewegung um die Werkzeugachse ausgebildet sein kann. Der Werkzeuggreifer kann ein Komplettwerkzeug, das das Werkzeugfutter und das im Werkzeugfutter befestigte Werkzeug umfasst, in einer umgekehrten Reihenfolge der Bewegungen wie beim Holen des Werkzeugfutters in die Beund Entladestation zurücksetzen. Von dort aus kann es beispielsweise durch eine Drehbewegung einer Endbearbeitung, insbesondere einer Kühlung, zugeführt werden. Die Vorrichtung weist daher einige in mehreren Freiheitsgraden separat bewegliche Mittel auf.

Der Erfindung liegt daher insbesondere die Aufgabe zugrunde, eine Vorrichtung zur Befestigung des Werkzeugs in dem Werkzeugfutter anzugeben, mit der mit relativ wenigen, unabhängig voneinander beweglichen Mitteln ein Werkzeug in einem Werkzeugfutter befestigt werden kann.

Sie wird gemäß der Erfindung durch die Merkmale des unabhängigen Patentanspruchs 1 gelöst. Weitere Ausgestaltungen ergeben sich aus den Unteransprüchen.

### Vorteile der Erfindung

Die Erfindung geht insbesondere aus von einer Vorrichtung zum Befestigen eines Werkzeugs in einem Werkzeugfutter, die ein Öffnungsmittel zur Öffnung des Werkzeugfutters für eine Werkzeugaufnahme und ein Haltemittel zum Halten des Werkzeugs umfasst.

Es wird eine Trägereinheit vorgeschlagen, an der das Öffnungsmittel und das Haltemittel angeordnet sind, wobei durch mindestens eine Bewegung der Trägereinheit als Ganzes sowohl das Öffnungsmittel als auch das Werkzeug mit Hilfe des Haltemittels relativ zum Werkzeugfutter bewegbar sind.

Dadurch können das Haltemittel und das Öffnungsmittel durch eine Bewegung der Trägereinheit bewegt werden. Separate Antriebe zur Bewegung des Haltemittels und des Öffnungsmittels können eingespart werden. Das Öffnungsmittel kann insbesondere ein Mittel zum Erwärmen sein, wodurch als Werkzeugfutter ein Schrumpffutter, das für eine Werkzeugaufnahme erwärmt werden muss, eingesetzt werden kann. Die Befestigung kann vollautomatisch und ohne Eingriffe eines Bedieners erfolgen, so dass Gefahren für einen Bediener gering gehalten werden können.

In einer besonders vorteilhaften Ausgestaltung sind durch die Bewegung der Trägereinheit sowohl das Öffnungsmittel als auch das Werkzeug mit Hilfe des Haltemittels über dem Werkzeugfutter positionierbar. Es können weitere Antriebe zur gesonderten Positionierung des Öffnungsmittels und des Werkzeugs über dem Werkzeugfutter eingespart werden.

Weiterhin wird vorgeschlagen, dass die Trägereinheit um eine Achse drehbar ist, die insbesondere parallel zu einer Längsachse des Werkzeugfutters ausgerichtet ist. Durch die Drehbarkeit der Trägereinheit ist eine besonders kompakte und stabile Ausgestaltung der Trägereinheit einsetzbar. Insbesondere durch eine parallele Ausrichtung der Achse der Trägereinheit zur Längsachse des Werkzeugfutters lassen sich außerdem Vorteile in einer einfachen und kompakten Bauweise der Vorrichtung erzielen. Gegenüber einer beispielsweise translatorischen Bewegung der Trägereinheit können die Antriebe für die um die Achse drehbare Trägereinheit besonders ökonomisch ausgelegt werden, da die Trägheit bei einer rotatorischen Bewegung geringer gehalten werden kann.

Besonders vorteilhaft ist es, wenn an der Trägereinheit ein Mittel zur Endbearbeitung eines Komplettwerkzeugs angeordnet ist, wobei das Komplettwerkzeug das Werkzeugfutter und das im Werkzeugfutter befestigte Werkzeug umfasst. Ist die Endbearbeitung des Komplettwerkzeugs nötig oder sinnvoll, kann das Mittel zur Endbearbeitung ebenfalls an der Trägereinheit angeordnet werden. Dadurch kann eine separate Vorrichtung zur Endbearbeitung eingespart werden. Die Endbearbeitung des Komplettwerkzeugs kann beispielsweise eine Kühlung des Schrumpffutters sein, damit das Komplettwerkzeug ohne Verbrennungsgefahr für einen Bediener aus der Vorrichtung zum Befestigen des Werkzeugs entnommen werden kann. Mit gleichem Vorteil können noch weitere Mittel zur Positionierung und/oder zur Bearbeitung des Werkzeugs an der Trägereinheit angeordnet werden, wie beispielsweise eine Schleifeinrichtung oder eine Vermesseinrichtung zum Vermessen eines Komplettwerkzeugs oder Werkzeugs.

Günstigerweise umfasst die Trägereinheit eine Stütze, an der ein Mittel zur Positionierung verfahrbar angeordnet ist, wobei das Öffnungsmittel und das Mittel zur Endbearbeitung an dem Mittel zur Positionierung angeordnet sind. Durch eine gemeinsame Beweglichkeit des Öffnungsmittels mit dem Mittel zur Endbearbeitung durch das Mittel zur Positionierung kann ein separater Antrieb für das Öffnungsmittel oder das Mittel zur Endbearbeitung eingespart werden. In besonders günstiger Ausgestaltung ist das Mittel zur Positionierung längs einer Rotationsachse der Trägereinheit bewegbar. Durch eine Konzentration der Bewegungen der Mittel längs und um die Achse der Trägereinheit können die Antriebe nah beieinander angeordnet werden, wodurch unter anderem eine Stromzuführung einfach und übersichtlich gestaltet werden kann.

Mit Vorteil ist durch mindestens eine Bewegung der Trägereinheit als Ganzes das Mittel zur Endbearbeitung in eine zur Endbearbeitung des Komplettwerkzeugs geeignete Stellung positionierbar. Ist das Mittel zur Endbearbeitung durch eine Bewegung der Trägereinheit positionierbar, können weitere Antriebe zur Bewegung des Mittels zur Endbearbeitung eingespart werden.

Zweckmäßigerweise ist das Mittel zur Endbearbeitung eine Kühlvorrichtung zur Kühlung des Werkzeugfutters mit mindestens einer ersten Kühleinheit mit einer Werkzeugaufnahmeöffnung mit einem ersten Durchmesser und einer zweiten Kühleinheit mit einer Werkzeugaufnahmeöffnung mit einem zweiten Durchmesser, der größer als der erste Durchmesser ist.
Durch diese Ausgestaltung kann die Kühlvorrichtung für Werkzeugfutter mit verschiedenen Durchmessern eingesetzt werden.

Von besonderem Vorteil ist es, wenn die Kühlvorrichtung ein Befestigungsmittel und einen am Befestigungsmittel drehbar gelagerten, die erste und die zweite Kühleinheit tragenden Rotator umfasst. Dadurch können die Kühleinheiten besonders platzsparend angeordnet werden.

Günstigerweise sind das Öffnungsmittel, das Haltemittel und das Mittel zur Endbearbeitung durch die Trägereinheit in die Längsachse des Werkzeugfutters bewegbar. Dadurch können die Vorgänge der Öffnung, des Haltens und der Endbearbeitung auf einem eng begrenzten Raum stattfinden, was insbesondere eine Überwachung der Vorgänge und eine Zugänglichkeit für außerplanmäßige Eingriffe einfach gestaltet. Besonders vorteilhaft werden die Mittel alle über das Werkzeugfutter bewegt, so dass sie in eine Bearbeitungsposition nur noch abgesenkt werden müssen.

Zweckmäßigerweise umfasst die Vorrichtung eine Werkzeugvermesseinrichtung, durch die ein in der Längsachse positioniertes Werkzeug vermessbar ist. Durch die Werkzeugvermesseinrichtung ist eine Position des Werkzeugs bestimmbar, und mittels der Messwerte ist das Werkzeug exakt im Werkzeugfutter positionierbar. Überdies sind die Bearbeitungsvorgänge durch die Messvorrichtung detailliert überwachbar. Ferner ist denkbar, mittels der Messeinrichtung das - gegebenenfalls im Werkzeugfutter befestigte - Werkzeug auch außerhalb eines Befestigungsvorgangs zu vermessen.

Bevorzugterweise ist die Bewegung der Trägereinheit als Ganzes eine Drehbewegung, und das Haltemittel, das Öffnungsmittel und das Mittel zur Endbearbeitung sind in Drehrichtung maximal 60° zueinander versetzt angeordnet. Dadurch ist eine besonders kompakte Ausgestaltung der Anordnung und durch kurze Wege eine schnelle Befestigung des Werkzeugs im Werkzeugfutter möglich.

Vorteilhafterweise ist der Abstand zwischen dem Haltemittel und dem Öffnungsmittel sowie zwischen dem Haltemittel und dem Mittel zur Endbearbeitung kleiner als der Abstand zwischen dem Öffnungsmittel und dem Mittel zur Endbearbeitung. Dadurch kann ebenfalls durch kurze Wege eine besonders kurze Bearbeitungszeit realisiert werden.

Bei den Winkelangaben und den Abstandsangaben wird jeweils Bezug genommen auf die Orte, an denen eine Werkzeuglängsachse im Öffnungsmittel, Haltemittel und Mittel zur Endbearbeitung angeordnet ist.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination.

Es zeigen:
- Fig. 1: eine Seitenansicht einer schematisch dargestellten Vorrichtung zum Befestigen eines Werkzeugs,
- Fig. 2: eine Draufsicht auf die Vorrichtung aus Fig. 1 gemäß einer Richtung II - II,
- Fig. 3: eine weitere Draufsicht auf die Vorrichtung aus Fig. 1,
- Fig. 4: eine schematische Detaildarstellung eines Haltemittels,
- Fig. 5: eine weitere Draufsicht auf die Vorrichtung aus Fig. 1,
- Fig. 6: eine Draufsicht auf eine schematisch dargestellte, alternative Vorrichtung zum Befestigen eines Werkzeugs,
- Fig. 7: eine Seitenansicht der Vorrichtung aus Fig. 6 gemäß einer Richtung VII - VII und
- Fig. 8: eine Draufsicht auf eine schematisch dargestellte, weitere alternative Vorrichtung.

### Beschreibung der Ausführungsbeispiele

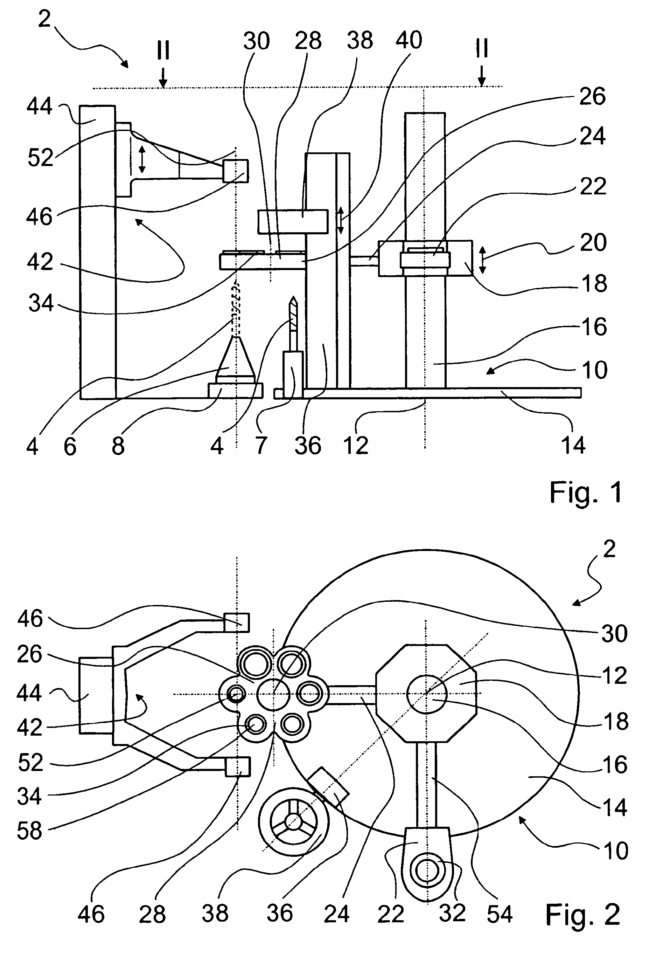

Figur 1 zeigt eine Vorrichtung 2 zum Befestigen eines Werkzeugs 4 in einem als Schrumpffutter ausgestalteten Werkzeugfutter 6 in einer Grundstellung. Das Werkzeug 4 ist in einer Werkzeugbereitstellung 7 und das Werkzeugfutter 6 in einer Spindel 8 eingesetzt. Gestrichelt angedeutet ist auch das nach einem Befestigungsvorgang befestigte Werkzeug 4 im Werkzeugfutter 6. Rechts in der Figur 1 ist eine Trägereinheit 10 gezeigt, die um eine Achse 12 drehbar gelagert ist und die einen Tisch 14 und eine Stütze 16 umfasst. An der Stütze 16 ist ein Mittel 18 zur Positionierung angeordnet, das in Richtung eines Doppelpfeils 20 an der Stütze 16 vertikal verfahrbar ist. An dem Mittel 18 zur Positionierung ist ein Öffnungsmittel 22 zur Öffnung des Werkzeugfutters 6 angebracht, das als ein Induktionsheizgerät mit einem Induktor 32 zur Erwärmung des Werkzeugfutters 6 ausgestaltet ist. Der Induktor 32 weist eine nicht dargestellte Absaugeinrichtung zur Absaugung von aus dem Werkzeugfutter 6 aufsteigenden Dämpfen auf.

An dem Mittel 18 zur Positionierung ist ein Haltearm 24 angeordnet, der eine Kühlvorrichtung 26 trägt. Die Kühlvorrichtung 26 umfasst einen Rotator 28, der um eine Achse 30 drehbar gelagert ist. Der Rotator 28 trägt sechs Kühleinheiten 34, die jeweils eine unterschiedlich weite Werkzeugaufnahmeöffnung 58 (Figur 2) zur Kühlung verschiedener Werkzeuge aufweisen. Auf der Trägereinheit 10 ist weiterhin ein Trägerelement 36 angebracht, an dem seinerseits ein Haltemittel 38 angeordnet ist. Das Haltemittel 38 ist ein Greifer zum Greifen des Werkzeugs 4. Das Haltemittel 38 ist längs eines Doppelpfeils 40 an dem Trägerelement 36 vertikal verfahrbar. Links in der Figur 1 ist eine Werkzeugvermesseinrichtung 42 mit einer an einer Messstütze 44 vertikal verfahrbaren Messoptik 46 dargestellt.

In Figur 2 ist eine Draufsicht auf die Vorrichtung 2 aus Figur 1 gezeigt gemäß einer Richtung II - II. Links in der Figur 2 ist die Werkzeugvermesseinrichtung 42 dargestellt mit der Messstütze 44 und der Messoptik 46, zwischen der das verdeckte Werkzeug 4 in der Längsachse 52 des verdeckten Werkzeugfutters 6 vermessen werden kann. Die Achse 12 verläuft senkrecht zur Darstellungsebene. Diese Perspektive zeigt, dass die Kühlvorrichtung 26 über den Haltearm 24 und das Öffnungsmittel 22 über einen weiteren Haltearm 54 an dem Mittel 18 zur Positionierung angeordnet sind. Der Rotator 28 der Kühlvorrichtung 26 ist so positioniert, dass eine der Werkzeugaufnahmeöffnungen 58 in der Längsachse 52 des Werkzeugfutters 6 positioniert ist. Mittels einer entsprechenden Drehung um die Achse 30 können alle weiteren Werkzeugaufnahmeöffnungen 58 in die Längsachse 52 des Werkzeugfutters 6 bewegt werden. Über der nicht sichtbaren Werkzeugbereitstellung 7 befindet sich das Haltemittel 38.

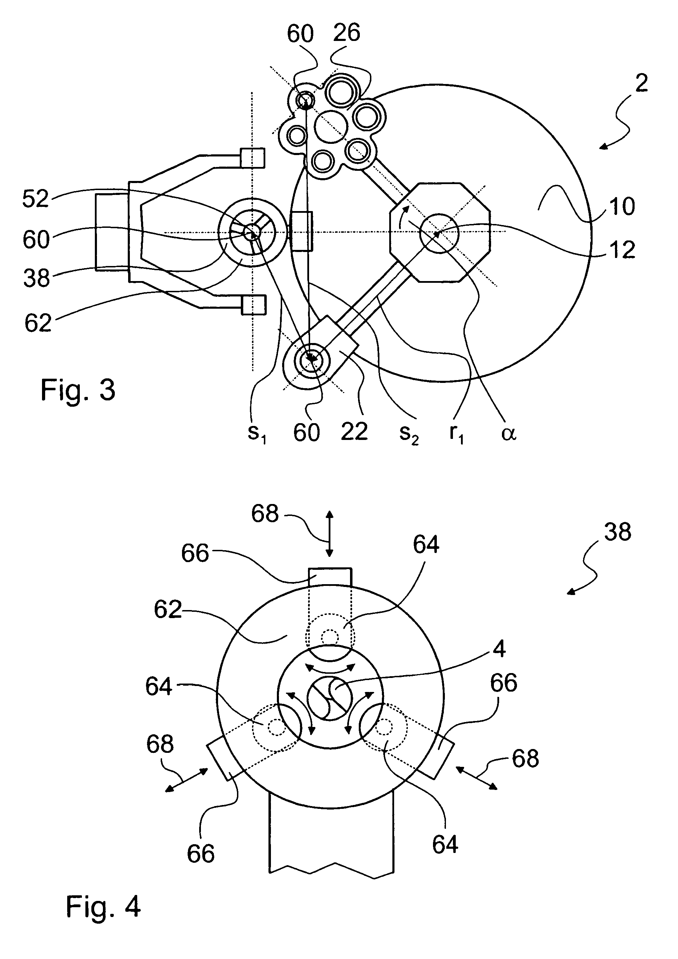

Figur 3 zeigt eine weitere Draufsicht auf die Vorrichtung 2. Es sind drei Orte 60 markiert, die bei einem Vorgang zum Befestigen des Werkzeugs 4 im Werkzeugfutter 6 in der Längsachse 52 des Werkzeugfutters 6 positioniert werden. Die Orte 60 sind im Öffnungsmittel 22, im Haltemittel 38 und in der Kühlvorrichtung 26 angeordnet. Die Orte 60 dienen auch als Bezugspunkte für Abstands- und Winkelangaben. So bezeichnet beispielsweise s₁ einen Abstand zwischen dem Haltemittel 38 und dem Öffnungsmittel 22 bzw. s₂ einen Abstand zwischen dem Öffnungsmittel 22 und der Kühlvorrichtung 26. Mit r₁ wird ein Abstand der Orte 60 von der Achse 12 bezeichnet. In dieser Darstellung ist gegenüber der Darstellung in Figur 2 die Trägereinheit 10 um einen Winkel α = 45° im Uhrzeigersinn um die Achse 12 gedreht dargestellt, wodurch sich das Haltemittel 38 in der Längsachse 52 des verdeckten Werkzeugfutters 6 befindet. Das Haltemittel 38 weist ein rundes Gehäuse 62 auf, das über dem Werkzeugfutter 6 konzentrisch um die Längsachse des Werkzeugfutters 6 positioniert ist.

In Figur 4 ist das Haltemittel 38 etwas detaillierter gezeigt. Das Haltemittel 38 weist ein Gehäuse 62, Rollen 64 zum Halten und Drehen des angedeuteten Werkzeugs 4 und Spannschlitten 66 zur Aufnahme unterschiedlicher Werkzeugdurchmesser auf. In einer Ruheposition der Spannschlitten 66 sind die Rollen 64 so weit wie möglich in Richtung dreier Doppelpfeile 68 außen positioniert. Durch entsprechende Verschiebung der Rollen 64 nach innen in Richtung der Doppelpfeile 68 kann das Haltemittel 38 auf unterschiedliche Werkzeugdurchmesser eingestellt werden. Eine der Rollen 64 ist als Antriebsrolle ausgebildet, so dass eine Drehung des fixierten Werkzeugs 4 möglich ist.

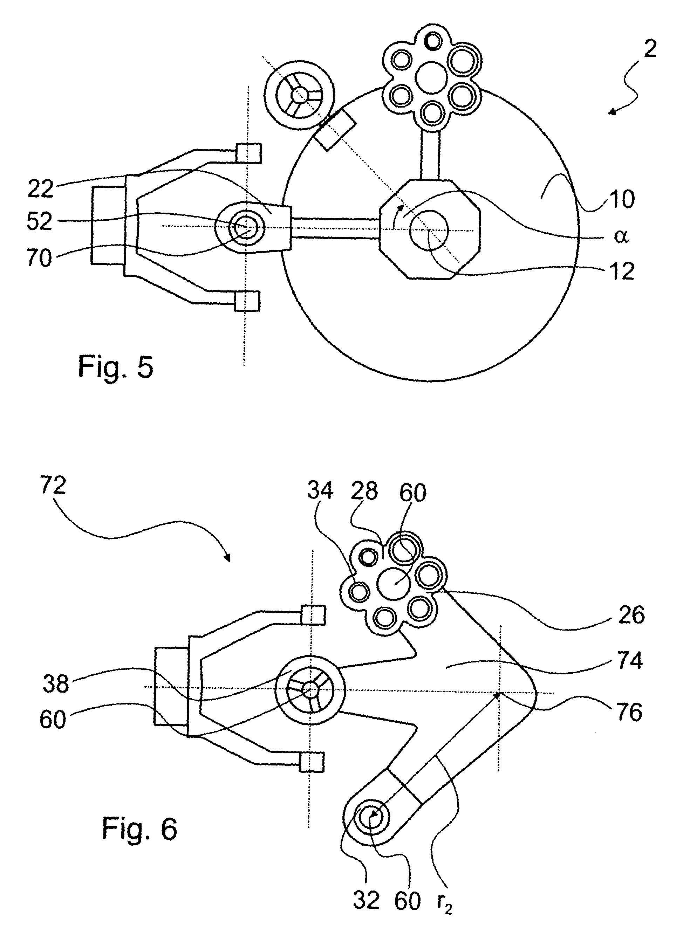

Figur 5 zeigt eine weitere Draufsicht auf die Vorrichtung 2. In dieser Darstellung ist die Trägereinheit 10 gegenüber der Darstellung in Figur 3 um den Winkel α = 45° im Uhrzeigersinn um die Achse 12 gedreht dargestellt. Das Öffnungsmittel 22 befindet sich in der Längsachse 52 des verdeckten Werkzeugfutters 6. Das Öffnungsmittel 22 weist eine runde Werkzeugaufnahmeöffnung 70 auf, die über dem Werkzeugfutter 6 konzentrisch um die Längsachse des Werkzeugfutters 6 positioniert ist.

Zur Befestigung des Werkzeugs 4 im Werkzeugfutter 6 wird zunächst das Werkzeugfutter 6 in die Spindel 8 eingesetzt. Die Vorrichtung 2 ist dabei in der in Figur 1 dargestellten Grundstellung. Außerdem wird das zu befestigende Werkzeug 4 in die Werkzeugbereitstellung 7 eingesetzt. Nun kann eine eventuell vorhandene Sicherung aktiviert, beispielsweise eine Tür geschlossen werden, und ein automatischer Ablauf kann gestartet werden.

Zunächst wird das Haltemittel 38 in Richtung des Doppelpfeils 40 am Trägerelement 36 nach unten bewegt, bis das in der Werkzeugbereitstellung 7 eingesetzte Werkzeug 4 umschlossen wird. Nun werden die Spannschlitten 66 des Haltemittels 38 aus ihrer Ruheposition (Figur 4) so lange in Richtung des Doppelpfeils 68 nach innen verschoben, bis das Werkzeug 4 durch die Rollen 64 sicher gehalten wird. Anschließend wird das Haltemittel 38 wieder hochbewegt, so dass das Haltemittel 38 mit dem gehaltenen Werkzeug 4 durch eine Drehung der Trägereinheit 10 über das Werkzeugfutter 6 gedreht werden kann. Nach einer Drehbewegung der Trägereinheit 10, die in diesem Ausführungsbeispiel eine 45°-Drehung im Uhrzeigersinn ist, ist das Werkzeug 4 über dem Werkzeugfutter 6 konzentrisch um die Längsachse des Werkzeugfutters 6 positioniert (Figur 3).

Nun wird das Werkzeug 4 vermessen, um es später präzise im Werkzeugfutter 6 positionieren zu können. Dazu wird die Messoptik 46 aus einer Ausgangsposition in eine zum Vermessen geeignete Position vertikal bewegt. Daraufhin dreht sich die Antriebsrolle des Haltemittels 38 (Figur 4), wodurch das Werkzeug 4 im Haltemittel 38 ebenfalls gedreht wird. Während der Drehbewegung werden das Werkzeug 4 und insbesondere eine oder mehrere Werkzeugschneiden vermessen. Nach dem Vermessen wird die Messoptik 46 in ihre Ausgangsposition zurückbewegt.

Im nächsten Schritt wird die Trägereinheit 10 um weitere 45° im Uhrzeigersinn gedreht, so dass der Induktor 32 über dem Werkzeugfutter 6 konzentrisch um die Längsachse 52 des Werkzeugfutters 6 positioniert ist (Figur 5). Daraufhin wird der Induktor 32 in Richtung des Doppelpfeils 20 (Figur 1) nach unten bewegt, bis er den Teil des Werkzeugfutters 6 umschließt, der zur Erwärmung vorgesehen ist. Der Induktor 32 wird mit elektrischem Strom beaufschlagt, wodurch sich der zur Erwärmung vorgesehene Teil des Werkzeugfutters 6 erwärmt und aufweitet. Danach wird der Induktor 32 wieder nach oben bewegt.

Anschließend wird die Trägereinheit 10 um 45° gegen den Uhrzeigersinn gedreht, so dass das im Haltemittel 38 gehaltene Werkzeug 4 wieder über dem nun geweiteten Werkzeugfutter 6 positioniert ist. Das Werkzeug 4 wird dann durch eine Bewegung des Haltemittels 38 nach unten in das Werkzeugfutter 6 eingeführt und dort mittels der durch die Vermessung gewonnenen Werte präzise positioniert. Nachdem das Werkzeugfutter 6 so weit abgekühlt ist, dass durch die damit verbundene Einschrumpfung das Werkzeug 4 im Werkzeugfutter 6 befestigt ist, werden die Spannschlitten 66 des Haltemittels 38 in Richtung des Doppelpfeils 68 nach außen in ihre Ruheposition verschoben. Damit wird das Werkzeug 4 nicht mehr vom Haltemittel 38 gehalten. Danach wird das Haltemittel 38 wieder nach oben bewegt.

Dann wird die Trägereinheit 10 ein weiteres Mal um 45° gegen den Uhrzeigersinn gedreht, so dass die Kühlvorrichtung 26 in der Längsachse 52 des Werkzeugfutters 6 über dem Werkzeugfutter 6 positioniert ist (Figur 2). Die zum jeweils zu kühlenden Werkzeugfutter 6 passende Kühleinheit 34 wurde bereits durch eine entsprechende Drehung des Rotators 28 so positioniert, dass sie durch eine nachfolgende Bewegung des Mittels 18 zur Positionierung nach unten in eine zur Kühlung des Werkzeugfutters 6 geeignete Position gebracht werden kann.

Nach ausreichender Abkühlung des Werkzeugfutters 6 wird die Kühlvorrichtung 26 durch das Mittel 18 zur Positionierung wieder nach oben bewegt, und das Komplettwerkzeug, das das Werkzeugfutter 6 und das im Werkzeugfutter 6 befestigte Werkzeug 4 umfasst, wird nach Öffnung der eventuell vorhandenen Tür entnommen. Die Vorrichtung 2 befindet sich wieder in ihrer Grundstellung und ist bereit für einen neuen Befestigungsvorgang.

Der Befestigungsvorgang kann vollautomatisch ablaufen. Eingriffe oder eine Unterstützung seitens eines Bedieners sind nicht notwendig.

Die Kühlvorrichtung 26, das Haltemittel 38 und der Induktor 32 sind in der gezeigten Ausführungsform an der Trägereinheit 10 in Drehrichtung der Trägereinheit 10 so angeordnet, dass das jeweils örtlich nächstliegende Mittel auch im chronologischen Einsatz am Werkzeugfutter 6 das nächste ist. Daher wird die Trägereinheit 10 pro Drehbewegung nur um einen kleinen Winkel, insbesondere 45°, zwischen der Kühlvorrichtung 26 und dem Haltemittel 38 bzw. zwischen dem Haltemittel 38 und dem Induktor 32 gedreht.

Für eventuelle Einstellungs- und Wartungsarbeiten ist die Trägereinheit 10 aber auch um größere Winkel drehbar.

In Figur 6 ist ein alternatives Ausführungsbeispiel einer Vorrichtung 72 zum Befestigen eines Werkzeugs in einer Draufsicht dargestellt. In diesem Ausführungsbeispiel ist eine Trägereinheit 74 um eine Achse 76 drehbar ausgebildet, wobei die Achse 76 senkrecht zur Darstellungsebene verläuft. Außerdem ist die Trägereinheit 74 längs der Achse 76 verfahrbar. Die Trägereinheit 74 weist drei Arme auf, an deren Enden das Öffnungsmittel 22, das Haltemittel 38 und die Kühlvorrichtung 26 angeordnet sind. Ein Abstand der Orte 60 von der Achse 76 ist mit r₂ gekennzeichnet.

Die Befestigung eines Werkzeugs 4 im Werkzeugfutter 6 mit der Vorrichtung 72 wird analog wie mit der Vorrichtung 2 vorgenommen. Bei der Vorrichtung 72 übernimmt die Trägereinheit 74 ebenfalls die vertikalen Positionierungsvorgänge des Haltemittels 38, des Induktors 32 und der Kühleinheiten 34.

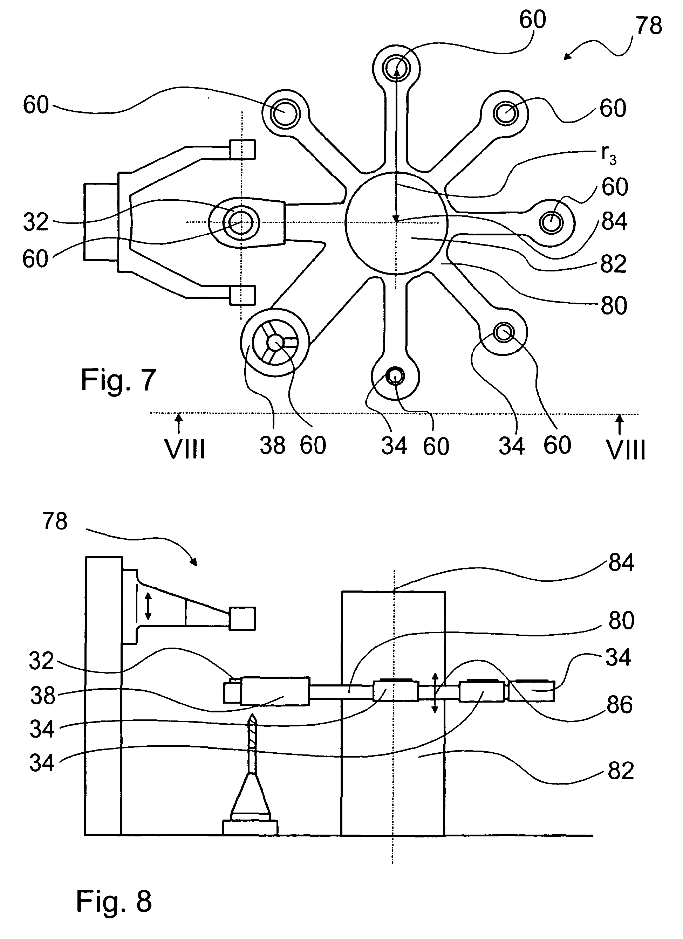

In Figur 7 ist ein zweites alternatives Ausführungsbeispiel einer Vorrichtung 78 zur Befestigung eines Werkzeugs 4 in einem Werkzeugfutter 6 in einer Draufsicht dargestellt. Zu erkennen sind der Induktor 32, das Haltemittel 38 sowie die Kühleinheiten 34, die separat an einer sternförmigen Trägereinheit 80 angeordnet sind. Die Trägereinheit 80 ist um eine Trägerstütze 82 bzw. um eine Achse 84 drehbar ausgebildet. In diesem Ausführungsbeispiel ist der Abstand der Orte 60 von der Achse 84 mit r₃ gekennzeichnet.

Figur 8 zeigt eine Seitenansicht des Ausführungsbeispiels aus Figur 7 gemäß einer Richtung VIII - VIII. In dieser Ansicht ist mittels eines Doppelpfeils 86 angedeutet, dass die Trägereinheit 80 auch in vertikaler Richtung verfahrbar an der Trägerstütze 82 angeordnet ist. Durch eine vertikale Beweglichkeit der Trägereinheit 80 entfällt eine separate Bewegung des Haltemittels 38. Außerdem entfallen durch separate Anordnung der Kühleinheiten 34 an der Trägereinheit 80 der Rotator 28 und eine separate Bewegung der Kühleinheiten 34 durch den Rotator 28.

Die Funktionsweise dieses Ausführungsbeispiels ändert sich dahingehend, dass die Trägereinheit 80 die für eine Befestigung des Werkzeugs 4 in dem Werkzeugfutter 6 nötigen Positionierungsvorgänge des Haltemittels 38, des Induktors 32 und der Kühleinheiten 34 durchführt. Durch das Konzentrieren der Beweglichkeiten auf die Trägereinheit 80 sind separate Antriebe des Haltemittels 38, des Induktors 32 und der Kühleinheiten 34 eingespart.

### Bezugszeichen

- 2: Vorrichtung
- 4: Werkzeug
- 6: Werkzeugfutter
- 7: Werkzeugbereitstellung
- 8: Spindel
- 10: Trägereinheit
- 12: Achse
- 14: Tisch
- 16: Stütze
- 18: Mittel
- 20: Doppelpfeil
- 22: Öffnungsmittel
- 24: Haltearm
- 26: Kühlvorrichtung
- 28: Rotator
- 30: Achse
- 32: Induktor
- 34: Kühleinheit
- 36: Trägerelement
- 38: Haltemittel
- 40: Doppelpfeil
- 42: Werkzeugvermesseinrichtung
- 44: Messstütze
- 46: Messoptik
- 52: Längsachse
- 54: Haltearm
- 58: Werkzeugaufnahmeöffnung
- 60: Orte
- 62: Gehäuse
- 64: Rollen
- 66: Spannschlitten
- 68: Doppelpfeil
- 70: Werkzeugaufnahmeöffnung
- 72: Vorrichtung
- 74: Trägereinheit
- 76: Achse
- 78: Vorrichtung
- 80: Trägereinheit
- 82: Trägerstütze
- 84: Achse
- 86: Doppelpfeil

- s₁: Abstand
- s₂: Abstand
- α: Winkel
- r₁: Abstand
- r₂: Abstand
- r₃: Abstand

## Patentansprüche

1. Vorrichtung (2, 72, 78) zum Befestigen eines Werkzeugs (4) in einem Werkzeugfutter (6), die ein Öffnungsmittel (22) zur Öffnung des Werkzeugfutters (6) für eine Werkzeugaufnahme und ein Haltemittel (38) zum Halten des Werkzeugs (4) umfasst,
**gekennzeichnet durch**
eine Trägereinheit (10, 74, 80), an der das Öffnungsmittel (22) und das Haltemittel (38) angeordnet sind, wobei **durch** mindestens eine Bewegung der Trägereinheit (10, 74, 80) als Ganzes sowohl das Öffnungsmittel (22) als auch das Werkzeug (4) mit Hilfe des Haltemittels (38) relativ zum Werkzeugfutter (6) bewegbar sind.

2. Vorrichtung (2, 72, 78) nach Anspruch 1,
**dadurch gekennzeichnet,**
**dass** durch die Bewegung der Trägereinheit (10, 74, 80) sowohl das Öffnungsmittel (22) als auch das Werkzeug (4) mit Hilfe des Haltemittels (38) über dem Werkzeugfutter (6) positionierbar sind.

3. Vorrichtung (2, 72, 78) nach einem der vorhergehenden Ansprüche,
**dadurch gekennzeichnet,**
**dass** die Trägereinheit (10, 74, 80) um eine Achse (12, 76, 84) drehbar gelagert ist, die insbesondere parallel zu einer Längsachse (52) des Werkzeugfutters (6) ausgerichtet ist.

4. Vorrichtung (2, 72, 78) nach einem der vorhergehenden Ansprüche,
**dadurch gekennzeichnet,**
**dass** an der Trägereinheit (10, 74, 80) ein Mittel zur Endbearbeitung eines Komplettwerkzeugs, insbesondere eine Kühlvorrichtung (26), angeordnet ist, wobei das Komplettwerkzeug das Werkzeugfutter (6) und das im Werkzeugfutter (6) befestigte Werkzeug (4) umfasst.

5. Vorrichtung (2, 72, 78) nach Anspruch 4,
**dadurch gekennzeichnet,**
**dass** die Trägereinheit (10, 74, 80) eine Stütze, an der ein Mittel zur Positionierung verfahrbar angeordnet ist, umfasst, wobei das Öffnungsmittel (22) und das Mittel zur Endbearbeitung an dem Mittel zur Positionierung angeordnet sind.

6. Vorrichtung (2, 72, 78) nach Anspruch 4 oder 5,
**dadurch gekennzeichnet,**
**dass** durch mindestens eine Bewegung der Trägereinheit (10, 74, 80) als Ganzes das Mittel zur Endbearbeitung in eine zur Endbearbeitung des Komplettwerkzeugs geeignete Stellung positionierbar ist.

7. Vorrichtung (2, 72, 78) nach einem der Ansprüche 4 bis 6,
**dadurch gekennzeichnet,**
**dass** das Mittel zur Endbearbeitung eine Kühlvorrichtung (26) zur Kühlung des Werkzeugfutters (6) ist mit mindestens einer ersten Kühleinheit (34) mit einer Werkzeugaufnahmeöffnung (58) mit einem ersten Durchmesser und einer zweiten Kühleinheit (34) mit einer Werkzeugaufnahmeöffnung (58) mit einem zweiten Durchmesser, der größer als der erste Durchmesser ist.

8. Vorrichtung (2, 72) nach Anspruch 7,
**dadurch gekennzeichnet,**
**dass** die Kühlvorrichtung (26) ein Befestigungsmittel und einen am Befestigungsmittel drehbar gelagerten, die erste und die zweite Kühleinheit (34) tragenden Rotator (28) umfasst.

9. Vorrichtung (2, 72, 78) nach einem der Ansprüche 4 bis 8,
**dadurch gekennzeichnet,**
**dass** das Öffnungsmittel (22), das Haltemittel (38) und das Mittel zur Endbearbeitung durch die Trägereinheit (10, 74, 80) in die Längsachse (52) des Werkzeugfutters (6) bewegbar sind.

10. Vorrichtung (2, 72, 78) nach Anspruch 9,
**gekennzeichnet durch**
eine Werkzeugvermesseinrichtung (42), **durch** die ein in der Längsachse (52) positioniertes Werkzeug (4) vermessbar ist.

11. Vorrichtung (2, 72, 78) nach einem der Ansprüche 4 bis 10,
**dadurch gekennzeichnet,**
**dass** die Bewegung der Trägereinheit (10, 74, 80) als Ganzes eine Drehbewegung ist und das Haltemittel (38), das Öffnungsmittel (22) und das Mittel zur Endbearbeitung in Drehrichtung maximal 60° zueinander versetzt angeordnet sind.

12. Vorrichtung (2, 72, 78) nach einem der Ansprüche 4 bis 11,
**dadurch gekennzeichnet,**
**dass** der Abstand (s₁) zwischen dem Haltemittel (38) und dem Öffnungsmittel (22) sowie zwischen dem Haltemittel (38) und dem Mittel zur Endbearbeitung kleiner ist als der Abstand (s₂) zwischen dem Öffnungsmittel (22) und dem Mittel zur Endbearbeitung.

## Claims

1. Apparatus (2, 72, 78) for fastening a tool (4) in a tool chuck (6), which apparatus (2, 72, 78) comprises an opening means (22) for opening the tool chuck (6) for mounting a tool and a holding means (38) for holding the tool (4), **characterized by** a carrier unit (10, 74, 80), on which the opening means (22) and the holding means (38) are arranged, it being possible for both the opening means (22) and the tool (4), by means of the holding means (38), to be moved relative to the tool chuck (6) by at least one movement of the carrier unit (10, 74, 80) as a whole.

2. Apparatus (2, 72, 78) according to Claim 1, **characterized in that** both the opening means (22) and the tool (4), by means of the holding means (38), can be positioned above the tool chuck (6) by the movement of the carrier unit (10, 74, 80).

3. Apparatus (2, 72, 78) according to either of the preceding claims, **characterized in that** the carrier unit (10, 74, 80) is rotatably mounted about an axis (12, 76, 84) which is oriented in particular parallel to a longitudinal axis (52) of the tool chuck (6).

4. Apparatus (2, 72, 78) according to one of the preceding claims, **characterized in that** a means for the final treatment of a complete tool, in particular a cooling device (26), is arranged on the carrier unit (10, 74, 80), the complete tool comprising the tool chuck (6) and the tool (4) fastened in the tool chuck (6).

5. Apparatus (2, 72, 78) according to Claim 4, **characterized in that** the carrier unit (10, 74, 80) comprises a support, on which a means for positioning is arranged in a traversable manner, the opening means (22) and the means for the final treatment being arranged on the means for positioning.

6. Apparatus (2, 72, 78) according to Claim 4 or 5, **characterized in that**, by at least one movement of the carrier unit (10, 74, 80) as a whole, the means for the final treatment can be positioned in a position suitable for the final treatment of the complete tool.

7. Apparatus (2, 72, 78) according to one of Claims 4 to 6, **characterized in that** the means for the final treatment is a cooling device (26) for cooling the tool chuck (6), comprising at least one first cooling unit (34) having a tool-locating opening (58) with a first diameter and a second cooling unit (34) having a tool-locating opening (58) with a second diameter which is larger than the first diameter.

8. Apparatus (2, 72) according to Claim 7, **characterized in that** the cooling device (26) comprises a fastening means and a rotator (28) rotatably mounted on the fastening means and carrying the first and the second cooling unit (34).

9. Apparatus (2, 72, 78) according to one of Claims 4 to 8, **characterized in that** the opening means (22), the holding means (38) and the means for the final treatment can be moved into the longitudinal axis (52) of the tool chuck (6) by the carrier unit (10, 74, 80).

10. Apparatus (2, 72, 78) according to Claim 9, **characterized by** a tool-measuring device (42), by means of which a tool (4) positioned in the longitudinal axis (52) can be measured.

11. Apparatus (2, 72, 78) according to one of Claims 4 to 10, **characterized in that** the movement of the carrier unit (10, 74, 80) as a whole is a rotary movement, and the holding means (38), the opening means (22) and the means for the final treatment are arranged offset from one another by at most 60° in the direction of rotation.

12. Apparatus (2, 72, 78) according to one of Claims 4 to 11, **characterized in that** the distance (s₁) between the holding means (38) and the opening means (22) and between the holding means (38) and the means for the final treatment is smaller than the distance (s₂) between the opening means (22) and the means for the final treatment.

## Revendications

1. Dispositif (2, 72, 78) pour fixer un outil (4) dans un mandrin d'outil (6), qui comprend un moyen d'ouverture (22) pour l'ouverture du mandrin d'outil (6) pour un logement d'outil et un moyen de retenue (38) pour retenir l'outil (4),
**caractérisé par**
une unité de support (10, 74, 80) sur laquelle sont disposés le moyen d'ouverture (22) et le moyen de retenue (38), au moins un mouvement de l'unité de support (10, 74, 80) dans son ensemble permettant de déplacer à la fois le moyen d'ouverture (22) et l'outil (4) à l'aide du moyen de retenue (38) par rapport au mandrin d'outil (6).

2. Dispositif (2, 72, 78) selon la revendication 1,
**caractérisé en ce que**
le moyen d'ouverture (22) ainsi que l'outil (4) peuvent être positionnés à l'aide du moyen de retenue (38) par-dessus le mandrin d'outil (6) par le mouvement de l'unité de support (10, 74, 80).

3. Dispositif (2, 72, 78) selon l'une quelconque des revendications précédentes,
**caractérisé en ce que**
l'unité de support (10, 74, 80) est montée à rotation autour d'un axe (12, 76, 84), qui est orienté notamment parallèlement à un axe longitudinal (52) du mandrin d'outil (6).

4. Dispositif (2, 72, 78) selon l'une quelconque des revendications précédentes,
**caractérisé en ce qu'**
un moyen d'usinage final d'un outil complet, notamment un dispositif de refroidissement (26), est disposé sur l'unité de support (10, 74, 80), l'outil complet comprenant le mandrin d'outil (6) et l'outil (4) fixé dans le mandrin d'outil (6).

5. Dispositif (2, 72, 78) selon la revendication 4,
**caractérisé en ce que**
l'unité de support (10, 74, 80) comprend un montant de support sur lequel est disposé un moyen déplaçable pour le positionnement, le moyen d'ouverture (22) et le moyen d'usinage final étant disposés sur le moyen de positionnement.

6. Dispositif (2, 72, 78) selon la revendication 4 ou 5, **caractérisé en ce que**
par au moins un mouvement de l'unité de support (10, 74, 80) dans son ensemble, le moyen d'usinage final peut être positionné dans une position appropriée pour l'usinage final de l'outil complet.

7. Dispositif (2, 72, 78) selon l'une quelconque des revendications 4 à 6,
**caractérisé en ce que**
le moyen d'usinage final est un dispositif de refroidissement (26) pour refroidir le mandrin d'outil (6) avec au moins une première unité de refroidissement (34) avec une ouverture de logement d'outil (58) ayant un premier diamètre et une deuxième unité de refroidissement (34) avec une ouverture de logement d'outil (58) ayant un deuxième diamètre, qui est supérieur au premier diamètre.

8. Dispositif (2, 72) selon la revendication 7,
**caractérisé en ce que**
le dispositif de refroidissement (26) comprend un moyen de fixation et un dispositif de rotation (28) monté à rotation sur le moyen de fixation, portant la première et la deuxième unité de support (34).

9. Dispositif (2, 72, 78) selon l'une quelconque des revendications 4 à 8,
**caractérisé en ce que**
le moyen d'ouverture (22), le moyen de retenue (38) et le moyen d'usinage final peuvent être déplacés par l'unité de support (10, 74, 80) dans l'axe longitudinal (52) du mandrin d'outil (6).

10. Dispositif (2, 72, 78) selon la revendication 9,
**caractérisé par**
un dispositif de mesurage (42) qui permet de mesurer un outil (4) positionné dans l'axe longitudinal (52).

11. Dispositif (2, 72, 78) selon l'une quelconque des revendications 4 à 10,
**caractérisé en ce que**
le mouvement de l'unité de support (10, 74, 80) dans son ensemble est un mouvement de rotation et le moyen de retenue (38), le moyen d'ouverture (22) et le moyen d'usinage final sont disposés de manière décalée l'un par rapport à l'autre dans la direction de rotation de 60° au maximum.

12. Dispositif (2, 72, 78) selon l'une quelconque des revendications 4 à 11,
**caractérisé en ce que**
la distance (s₁) entre le moyen de retenue (38) et le moyen d'ouverture (22) ainsi qu'entre le moyen de retenue (38) et le moyen d'usinage final est inférieure à la distance (s₂) entre le moyen d'ouverture (22) et le moyen d'usinage final.
